# EUROPÄISCHE PATENTSCHRIFT

(11) **EP 0 602 485 B1**
(45) Veröffentlichungstag und Bekanntmachung des Hinweises auf die Patenterteilung: **12.08.1998**
(21) Anmeldenummer: 93119590.3
(22) Anmeldetag: 06.12.1993
(51) Int. Cl.: B04B 5/04

(54) **Vorrichtung zum Zentrifugieren von Proben**
Sample centrifuging device
Dispositif de centrifugation d'échantillons

(30) Priorität: 16.12.1992 DE 4242476
(43) Veröffentlichungstag der Anmeldung: 22.06.1994
(73) Patentinhaber: EPPENDORF-NETHELER-HINZ GMBH, D-22339 Hamburg (DE)
(72) Erfinder: Gerken, Hero, Dr.-Ing., D-2000 Hamburg 63 (DE); Bouchain, Dieter, Dr.-Ing., D-2000 Hamburg 63 (DE)
(74) Vertreter: Patentanwälte Hauck, Graalfs, Wehnert, Döring, Siemons

(56) Entgegenhaltungen:
- EP-A- 0 029 318
- EP-A- 0 325 101
- WO-A-83/00296
- CH-A- 531 367
- DE-A- 2 627 133
- DE-A- 2 910 868
- DE-A- 3 512 848
- US-A- 4 375 272

## Beschreibung

Gegenstand der Erfindung ist eine Vorrichtung zum Zentrifugieren von Proben.

Typische Vorgänge bei der Probenaufbereitung im Laborbereich sind Dosieren, Mischen, Temperieren, Filtrieren, Schließen, Öffnen, Waschen, Numerieren, Codieren, Wiederauffinden, Ordnen, Zentrifugieren. Man ist bestrebt, diese Vorgänge durch eine geeignete Probenorganisation zu fördern. Überdies wird eine möglichst weitgehende Automatisierung der Probenaufbereitung angestrebt.

Für eine gemeinsame Handhabung von Probenaufnahmegefäßen sind bereits kettenartige Vorrichtungen bekannt geworden, die zylindrische Gefäßaufnahmen haben. Die Aufnahmezylinder sind über achsparallele Schwenkgelenke miteinander verbunden, die eine Kettenbewegung um enge Radien, beispielsweise in Analysegeräten ermöglichen. Die Kette vereinfacht zwar die Labororganisation, indem sie eine Erleichterung von Transport, Numerieren, Codieren und Wiederauffinden der Laborgefäße bewirkt. Problematisch ist jedoch die Beschickung der Aufnahmen, die zumeist mehrfache manuelle Ordnungsvorgänge erfordert. Das Zentrifugieren setzt bei Probengefäßen mit herkömmlicher Abdichtung eine schräge oder horizontale Anordnung der Gefäßachse auf dem Rotor voraus, die den Massenausgleich beeinträchtigt und zu unerwünschten Durchmischungen nach Entnahme und Wiederaufrichten der Kette führen kann.

Grundsätzlich können die Probengefäße beim Zentrifugieren horizontal, schräg oder vertikal angeordnet sein. Es gibt auch Zentrifugen mit Rotoren, die einen fliehkraftgesteuerten Schwenkarm haben, so daß die Gefäßausrichtung bei stehender Zentrifuge vertikal und beim Zentrifugieren schräg oder annähernd horizontal ist. Im biochemischen Labor und der Mikrobiologie werden starre Rotoren mit ca. 45° Schrägstellung der Laborgefäße bevorzugt. Die Probenstellung in der Zentrifuge ist zum einen von Bedeutung, weil von ihr der die Zentrifugierzeit mitbestimmende maximale Sedimentationsweg abhängt, über den sich das Präzipitat aufgrund eines Dichteunterschieds von der Flüssigkeit trennt. Der Sedimentationsweg ist bei horizontaler Gefäßausrichtung am größten und bei vertikaler Ausrichtung am geringsten. Zum anderen ist sie hinsichtlich der Beschleunigungen beim Zentrifugieren relevant, die typischerweise dem 15000-fachen der Erdbeschleunigung entsprechen können. Die Deckelabdichtung wird bei horizontalem Gefäß von der Probe am wenigsten und bei vertikalem Gefäß am stärksten belastet. Eine schräge Ausrichtung der Probengefäße kann als günstiger Kompromiß angesehen werden.

Bislang hat man Laborzentrifugen entweder von Hand oder mittels eines besonderen Laborroboters automatisch bestückt. Es ist auch schon bekannt geworden, den Rotor manuell oder automatisch vorzubestücken und danach mit der Zentrifuge zu koppeln. Dabei erfordert Teilbeschickung eine symmetrische Massenverteilung auf dem Rotor. Diese Vorgänge sind bei manueller Durchführung mühselig sowie fehlerträchtig und bei Automatisierung zeitaufwendig. Eine Automatisierung der Zentrifugation mit höherer Bearbeitungsgeschwindigkeit ist insbesondere bei Mehrfachzentrifugation ohne Gefäßwechsel innerhalb eines Prozesses wünschenswert. Dies ist vor allem in der Molekularbiologie der Fall, beispielsweise bei der Gewinnung von DNA aus Plasmiden oder Bakteriophagen. Dafür ist ein periodischer Wechsel zwischen den Dosier-, Misch-, Zentrifugier- und Temperierstationen charakteristisch.

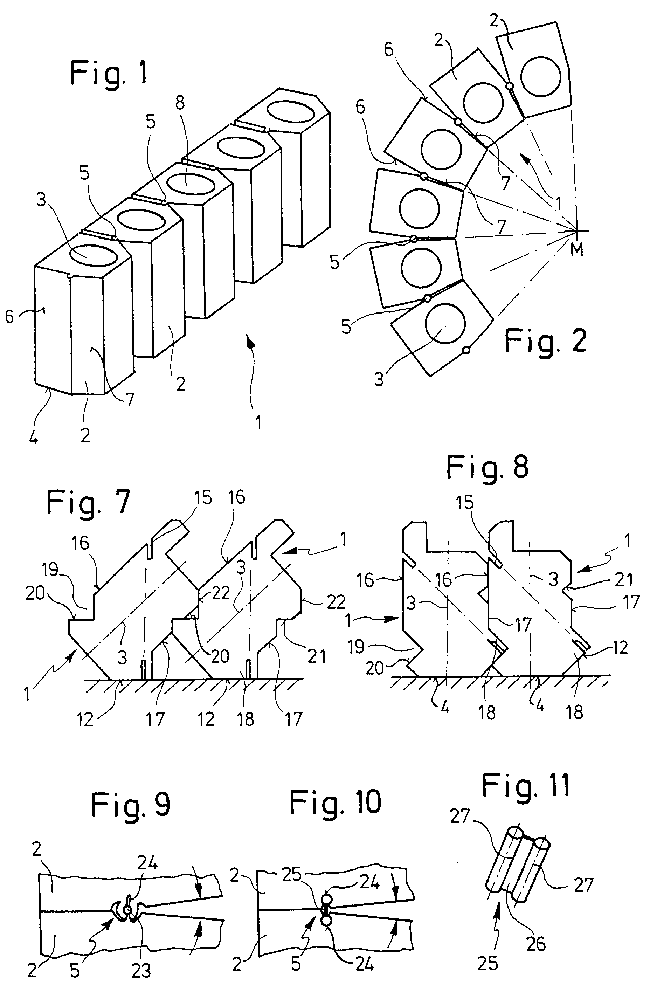

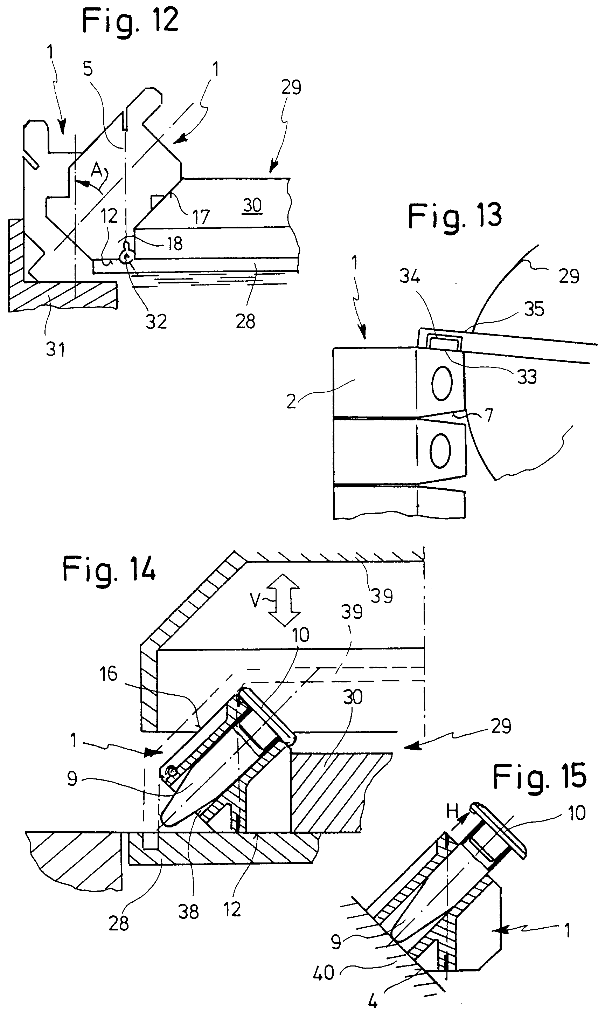

Die EP-A-0 029 319 beschreibt eine Vorrichtung zum Zentrifugieren von Proben, die zwei Elemente aufweist, die an einem zentralen Träger 16 aneinandergelenkt sind (vgl. Fig. 2). Wenn der Träger auf dem Rotor plaziert wird, werden die Elemente etwas auseinandergeschwenkt (vgl. Fig. 7). Jedes Element ist mit mehreren Aufnahmen für Probenröhrchen versehen, die übereinander angeordnet sind, wenn die Vorrichtung im Rotor angeordnet ist. Die Aufnahmen haben entweder eine eindeutige Ausrichtung bezüglich der Elemente, so daß die Probenröhrchen im Rotor horizontal gehalten werden (vgl. Fig. 7). Bei einer anderen Ausführungsform sind sie so ausgestaltet, daß die Probenröhrchen schwenkbar gehalten sind und in Ruhelage des Rotors nach unten geneigt und bei Rotordrehung im wesentlichen horizontal ausgerichtet sind (vgl. Fig. 10 bis 14). Die Vorrichtung muß jeweils um 90° gedreht werden, wenn sie von einem Tisch (vgl. Fig. 1) auf einen Rotor (vgl. Fig. 7) übertragen wird oder umgekehrt. Während dieser großen Schwenkbewegungen kann die Probe in den Probenröhrchen leicht durchmischt werden.

Davon ausgehend liegt der Erfindung die Aufgabe zugrunde, eine Vorrichtung zum Zentrifugieren zu schaffen, welche die Behandlung von Proben im Laborbereich und deren Automatisierung begünstigt.

Die Lösung der Aufgabe ist im Anspruch 1 angegeben. Vorteilhafte Ausgestaltungen sind in den Unteransprüchen enthalten.

Bei der erfindungsgemäßen Vorrichtung ermöglicht der Träger das einheitliche Aufnehmen, Transportieren und Aufbereiten einer Mehrzahl von Proben. Dadurch werden Übertragungsschritte der Probengefäße mit dem einhergehenden Handhabungs- und Zeitaufwand so wie den dabei möglichen Fehlern vermindert. Beispielsweise entfällt das Umsetzen einzelner Probengefäße beim Übergang von einer Mischstation in eine Zentrifuge. Die Träger sind hingegen mit einer Mehrzahl von Proben besonders einfach in ihre gekrümmte Lage auf dem Rotor überführbar. Durch die Anordnung der Probenaufnahmen auf einem Kreis mit dem Mittelpunkt auf der Rotordrehachse wird zudem die Zentrifugation selber begünstigt, insbesondere der Massenausgleich und eine optimale Probenausrichtung zur Zentrifugenachse.

Für eine Probenbehandlung außerhalb des Rotors können die Elemente mit ihren Aufnahmen in eine lineare Lage bis auf eine Gerade geschwenkt werden. Diese Ausrichtung ist für andere Vorgänge wie Beschicken, Entnahme, Öffnen und Schließen von Gefäßen, Zugeben, Verdünnen und Entnehmen sowie Transferieren von Proben vorzuziehen. Die Träger können, gegebenenfalls als Blöcke zusammengefaßt, automatisch abgearbeitet werden. Eine Symmetrie der Rotorbeschickung wird durch gleichartige Anordnung von gleichvielen Gefäßen auf sämtlichen Trägern des Rotors sichergestellt. Die erfindungsgemäße Vorrichtung ermöglicht erstmals einen automatisierten Ablauf des Zentrifugiervorganges und dessen Einbeziehung in eine automatisierte Probenaufbereitung unter blockweiser Probenzusammenfassung und optimaler Anordnung derselben innerhalb und/oder außerhalb des Rotors ohne Wechsel des Gefäßhalters.

Die Ausrichtung der Probengefäße außerhalb des Rotors ist bevorzugt vertikal. Wenn die Aufnahmen für die Probengefäße parallel zu den Gelenkachsen des Trägers erstreckt sind, sind die Proben auch innerhalb des Rotors vertikal angeordnet. Für eine geneigte Anordnung der Proben innerhalb und ggfs. außerhalb des Rotors können die Aufnahmen zu den Gelenkachsen geneigt sein. Hierdurch werden günstige Zentrifugierzeiten ermöglicht und Durchmischungseffekte vermieden. Zur Vermeidung ungünstiger Belastungen der Deckel von Probengefäßen sind die Aufnahmen bei Anordnung auf einer Kreisbahn mit ihren Füllöffnungen dem Kreismittelpunkt am nächsten. Die Probengefäße können aber auch außerhalb des Rotors unter einem ersten Winkel zur Vertikalen und außerhalb sowie innerhalb des Rotors unter einem zweiten Winkel zur Vertikalen ausrichtbar sein.

Für die Ausrichtung der Probengefäße unter bestimmten Winkeln zur Vertikalen weisen die Elemente erste und zweite Ausrichtflächen auf. Bei den Ausrichtflächen kann es sich um Aufstandsflächen handeln, auf denen die Elemente ruhen. Die Ausrichtflächen können aber auch Seitenflächen sein, an denen die Elemente fixierbar sind.

Die aneinandergeketteten Elemente des Trägers können von einer gekrümmten Lage mit sämtlichen Aufnahmen auf einer Kreisbahn bis in eine durch äußere Anschläge begrenzte Lage mit sämtlichen Aufnahmen auf einer Geraden schwenkbar sein. In der gekrümmten Lage befinden sich die Proben in den Aufnahmen also auf einer Kreisbahn und sind in der linearen Lage auf einer Geraden angeordnet. Die Träger können zusätzlich innere Anschläge aufweisen, welche die Elemente an einer weiteren Schwenkbewegung von der Geraden weg hindern. "Äußere Anschläge" sind bezüglich der Kreisbahn durch die Aufnahmezentren in gekrümmter Lage des Trägers außen und "innere Anschläge" bezüglich der Kreisbahn innen angeordnet.

Ferner können die Elemente des Trägers in Richtung der Aufnahmen parallel zueinander erstreckte erste und zweite Anlageflächen haben, mit denen sich benachbarte Träger aneinanderlegen können. Zudem können die Elemente für eine platzsparende Anordnung und gegenseitige Abstützung verschiedener Träger mit komplementär geformten Vorsprüngen und Aufnahmen versehen sein.

Die Träger können der Aufnahme von Probengefäßen dienen, worunter auch Zentrifugenröhrchen oder -gläschen verstanden werden. Dafür können die Aufnahmen zumindest bereichsweise der Außenkontur von Probengefäßen angepaßt sein. Die Aufnahmen können kürzer als aufzunehmende Probengefäße sein, so daß diese im Boden- und Deckelbereich von außen beeinflußbar sind, beispielsweise für ein Mischen oder ein Temperieren. Wenn die Aufnahmen die aufzunehmenden Gefäße an der deckelabgewandten Seite vollständig umschließen, werden die Gefäße an einer Verformung durch hohe Zentrifugalkräfte gehindert. Ferner können die Aufnahmen unterhalb der Füllöffnungen für eine unmittelbare Probenaufnahme geschlossen sein. Nahe der Füllöffnung wird man die Elemente dann mit Gefäßdeckeln ausstatten. Für eine optische Messung und Begutachtung der Gefäße und deren Inhalte können die Elemente zumindest teilweise transparent sein.

Die Elemente des Trägers können blockförmig ausgebildet sein, wobei die Aufnahmen von Löchern in den Blöcken gebildet werden. Die Elemente können aber auch materialsparend plattenförmig sein und von Hülsen gebildete Aufnahmen haben. Die plattenförmigen Elemente sind an ihren Seitenkanten aneinandergelenkt. Die Hülsen schneiden die plattenförmigen Elemente unter einem bestimmten Winkel.

Die Gelenke können als zusätzlich oder einteilig mit den Elementen ausgebildete Scharnierbänder oder als zusätzliche Verbindungselemente mit Verankerungen in Gelenkaufnahmen der Elemente ausgebildet sein. Ferner kommen Kombinationen aus Zapfen und Zapfenaufnahmen an benachbarten Elementen in Betracht.

Bevorzugt haben die Träger Einrichtungen zur Stabilisierung der Elemente in der gekrümmten und/oder der linearen Lage, die federnde Elemente, Verrastungen oder in den Endlagen wirksame Magnete haben können.

Ferner können die Träger Einrichtungen zum Ankuppeln an den Rotor bzw. eine Transportvorrichtung haben, die bevorzugt in einer Gelenkebene angreifen und formschlüssige oder reibschlüssige Mittel bzw. Magneteinrichtungen aufweisen. Zur Lagefixierung kann zwischen die Trägerenden jeweils ein Radialsteg des Rotors eingreifen. Der Radialsteg kann Kupplungseinrichtungen komplementär zu denjenigen des Trägers haben.

Bevorzugt bedeckt jeder Träger in gekrümmter Lage lediglich ein Kreissegment. Ein Rotor wird dann stets mit mehreren Trägern bestückt, wobei durch symmetrische Anordnung der Spalte zwischen den Trägern eine günstige Massenverteilung erreicht wird.

Vorzugsweise werden die Trägerelemente aus Kunststoff und/oder aus Metall hergestellt. Im allgemeinen wird man einen beständigen und festen Werkstoff auswählen.

Der Rotor kann eine Stellfläche für mindestens einen Träger in gekrümmter Lage und mindestens eine radiale Abstützung für den Träger aufweisen. Die radiale Abstützung kann innen und/oder außen ausgebildet sein.

Der Transfer des Trägers zum Rotor hin bzw. vom Rotor weg kann entlang axialer, radialer und/oder tangentialer Führungen erfolgen. Außerhalb des Rotors können die Träger in linearer Lage, parallel und/oder seriell zueinander angeordnet sein.

Bevorzugt durchläuft jeder Träger eine Bewegungsbahn, in der sich neben anderen Bearbeitungseinrichtungen eine Zentrifuge befinden kann. Unabhängig von der Form der Bewegungsbahn kann sich darin, eine Dosierstation, eine Mischeinrichtung, eine Temperiereinrichtung, eine Deckelschließstation bzw. eine Deckelöffnungsstation befinden.

Die Bewegung des Trägers entlang einer Bahn kann von einer automatischen Steuerung, vorzugsweise einer Programmsteuerung, gesteuert sein. Diese kann den Trägertransport sowie die Bearbeitung in den Bearbeitungsstationen an der Bewegungsbahn steuern. Es können auch unterschiedliche Abläufe bei verschiedenen Trägern oder Gruppen von Trägern vorgesehen sein.

Weitere Einzelheiten und Vorteile der Erfindung ergeben sich aus der nachfolgenden Beschreibung der Zeichnungen, die bevorzugte Ausgestaltungen zeigen. In den Zeichenungen zeigen:
- Fig. 1: Träger mit Gelenkachsen parallel zu den Aufnahmen in linearer Lage in perspektivischer Seitenansicht;
- Fig. 2: derselbe Träger in gekrümmter Lage in der Draufsicht;
- Fig. 3: Träger mit um 45° zur Vertikalen geneigten Aufnahmen im Querschnitt;
- Fig. 4: derselben Träger in linearer Lage in der Draufsicht;
- Fig. 5: Träger mit um 45° zur Gelenkachse geneigten Aufnahmen sowie ersten, zweiten und dritten Aufstandsflächen im Querschnitt;
- Fig. 6: ein Element desselben Trägers in der Draufsicht;
- Fig. 7: zwei weitere Träger auf der zweiten Aufstandsfläche ruhend und aneinander abgestützt im Querschnitt;
- Fig. 8: zwei Träger gemäß Fig. 7 auf der ersten Aufstandsfläche ruhend und zusammengeschoben im Querschnitt;
- Fig. 9: eine Gelenkverbindung zweier Trägerelemente im Längsschnitt;
- Fig. 10: eine andere Gelenkverbindung zweier Trägerelemente im Längsschnitt;
- Fig. 11: Verbindungselement der Gelenkverbindung gemäß Fig. 10 in vergrößerter Perspektivansicht;
- Fig. 12: Träger bei der Übernahme auf einem Rotor im Querschnitt;
- Fig. 13: Magnetankopplung eines Trägers an einen Rotor in der Draufsicht;
- Fig. 14: Träger mit eingesetztem Probengefäß auf einem Rotor im Querschnitt;
- Fig. 15: derselbe Träger mit eingesetztem Gefäß außerhalb eines Rotors auf einer anderen Aufstandsfläche ruhend im Querschnitt;
- Fig. 16: Träger in einer Deckelöffnungsvorrichtung im Querschnitt;
- Fig. 17: Träger in einer Deckelschließvorrichtung im Querschnitt;
- Fig. 18: Träger mit Durchbrüchen quer zu den Aufnahmen in einer optischen Meßvorrichtung im Querschnitt;
- Fig. 19: ein einteilig aus Kunststoff gespritzter Träger in Vorderansicht;
- Fig. 20: derselbe Träger in der Draufsicht;
- Fig. 21: einteilig gespritzer Träger mit darin ausgebildeten Probengefäßen im stark schematisierten Querschnitt;
- Fig. 22: automatische Zentrifuge mit tangentialer Rotorbeschickung und getrennten Ein- und Ausgabebahnhöfen in der Draufsicht;
- Fig. 23: automatische Analyseneinrichtung mit geschlossener Bewegungsbahn der Proben und darin enthaltener Zentrifuge in schematischer Draufsicht;
- Fig. 24: zwei Träger mit plattenförmigen Elementen und eingesetzten Probengefäßen im Querschnitt;
- Fig. 25: derselbe Träger im Längsschnitt entlang Linie A-A der Fig. 24;
- Fig. 26 und 27: dieselben Träger auf einer Arbeitsplatte mit verschiedenen Ausrichtungen angeordnet im Querschnitt;
- Fig. 28: derselbe Träger auf einem Rotor im Querschnitt;
- Fig. 29: Element eines anderen Trägers mit plattenförmigen Elementen in perspektivischer Seitenansicht;
- Fig. 30 und 31: derselbe Träger auf verschiedenen Rotoren einer Zentrifuge angeordnet im Querschnitt.

Figuren 1-4 und 26,27 betreffen keine Ausführungsbeispiele der Erfindung.

In der folgenden Beschreibung verschiedener Ausführungsbeispiele sind funktionell gleiche oder ähnliche Konstruktionselemente mit identischen Bezugsziffern versehen.

Ein Träger 1 gemäß Fig. 1 und 2 hat mehrere Elemente 2, die jeweils eine Aufnahme 3 aufweisen. Diese ruhen sowohl in der linearen Lage gemäß Fig. 1, als auch in der gekrümmten Lage gemäß Fig. 2 auf ersten Aufstandsflächen 4.

Zwischen den Elementen 2 sind Gelenke 5 ausgebildet, deren Achsen parallel zu den Aufnahmen 3 und vertikal zu den ersten Aufstandsflächen 4 ausgerichtet sind. Außerdem hat jedes Element 2 äußere Seitenflächen 6, die ebenfalls parallel zu den Aufnahmen 3 und vertikal zur ersten Aufstandsfläche 4 hin gerichtet sind. Die äußeren Seitenflächen 6 bilden Anschläge, die in linearer Lage des Trägers 1 zwischen den Elementen aneinanderstoßen. Auf der gegenüberliegenden Seite der Gelenke 5 sind innere Seitenflächen 7 angeordnet, die ebenfalls parallel zu den Aufnahmen 3 und senkrecht zur ersten Aufstandsfläche 4 gerichtet sind und in jedem Element zu den Gelenken 5 hin divergieren. Die inneren Seitenflächen 7 bilden wiederum Anschläge, die in der gekrümmten Lage des Trägers 1 zwischen Nachbarelementen 2 aneinanderstoßen.

Bei diesem Träger 1 sind durch obere Füllöffnungen 8 der Elemente 2 eingesetzte Probengefäße sowohl in der linearen, als auch in der gekrümmten Lage des Trägers 1 vertikal angeordnet.

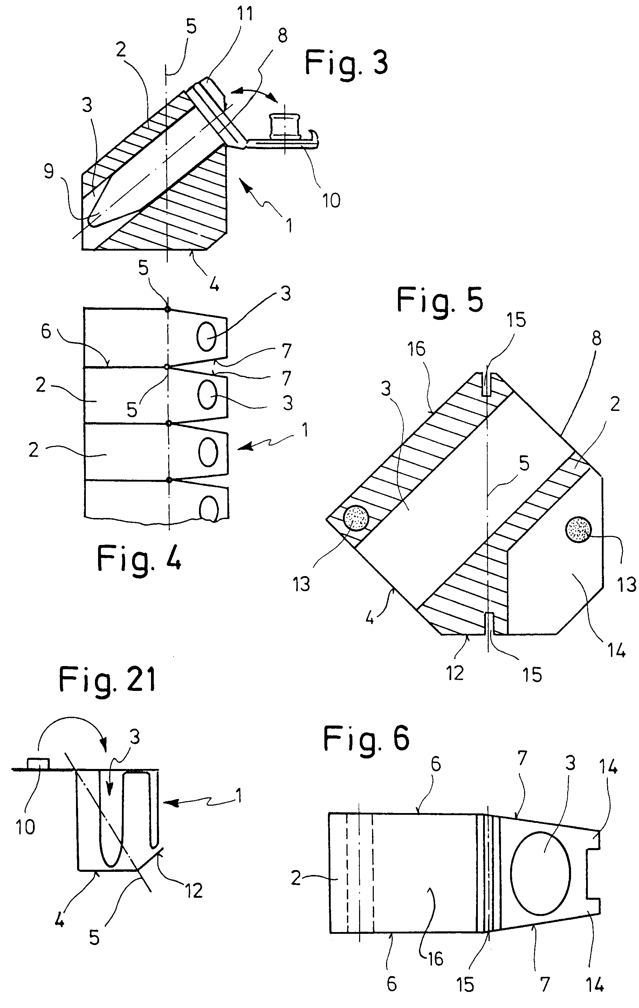

Ein Träger 1 nach Fig. 3 und 4 unterscheidet sich von dem Träger gemäß Fig. 1 und 2 dadurch, daß die Aufnahmen 3 um 45° zu den Achsen der Gelenke 5 und somit auch um 45° zur ersten Aufstandsfläche 4 geneigt sind. Auch hier ist die Schwenkbarkeit der Elemente 2 durch äußere Seitenflächen 6 für die lineare Lage und innere Seitenflächen 7 für die gekrümmte Lage (nicht gezeigt) begrenzt. Ein durch die Füllöffnung 8 eingesetztes Probengefäß 9 ist also in beiden Endlagen des Trägers 1 um 45° zur Vertikalen geneigt. Die Dichtung durch einen Gefäßdeckel 10 wird folglich durch Zentrifugalkräfte nur geringfügig belastet. Eine exakte Ausrichtung der Probengefäße 9 im Träger 1 wird durch zwei voneinander beabstandete Führungssäulen 11 für beidseitige Führung des Deckels 10 erreicht.

Elemente 2 eines Trägers gemäß Fig. 5 und 6 haben senkrecht zu ihren Aufnahmen 3 erste Aufstandsflächen 4. Zweite Aufstandsflächen 12, auf denen das Element 2 ruhend dargestellt ist, sind um 45° geneigt zu den ersten Aufstandsflächen 4 angeordnet. Durch eine Füllöffnung 8 in die Aufnahmen 3 der Elemente 2 eingeschobene Probengefäße stehen also vertikal, wenn der Träger auf den ersten Aufstandsflächen 4 ruht. Sie sind um 45° zur Vertikalen geneigt, wenn der Träger auf den zweiten Aufstandsflächen 12 aufliegt. In linearer Lage läßt man den Träger bevorzugt auf den ersten Aufstandsflächen 4 ruhen, wogegen er in gekrümmter Lage auf den zweiten Aufstandsflächen 12 ruhen muß.

Als Schwenkwinkelbegrenzungen sind wiederum parallele äußere Seitenflächen 6 auf der einen Seite der Gelenke 6 und zueinander angewinkelte innere Seitenflächen 7 auf der anderen Gelenkseite angeordnet. Die äußeren Seitenflächen 6 bilden die Anschläge für die lineare Lage und die inneren Seitenflächen 7 wirken als Anschlagflächen für die gekrümmte Lage des Trägers.

Zur Lagestabilisierung des Trägers in den Endlagen hat jedes Element 2 in den äußeren und den inneren Seitenflächen Dauermagnete 13, die einen Preßsitz in den Seitenflächen haben können. Die Dauermagnete 13 wirken mit entsprechenden Magneten eines benachbarten Elementes 2 zusammen, wobei in der linearen Lage Magneten in den äußeren Seitenflächen 6 und in der gekrümmten Lage Magnete in den inneren Seitenflächen 7 aneinander haften und den Träger in der jeweiligen Lage halten.

Die inneren Seitenflächen 7 sind im Unterbereich der Elemente 2 an voneinander beabstandeten Wandabschnitten 14 ausgebildet, die zwischen sich entsprechende Einführelemente weiterer Vorrichtungsteile zur Lagestabilisierung aufnehmen können.

Die Gelenke 5 sind als Scharnierbänder ausgebildet, die in oberen und unteren Aufnahmenuten 15 der Elemente 2 gehalten sind und sämtliche Elemente des Trägers miteinander verbinden.

Die Elemente 2 haben eine dritte Aufstandsfläche 16, die parallel zur Aufnahme 3 sowie der ersten Aufstandsfläche 4 gerichtet ist. Die dritte Aufstandsfläche 16 kann der horizontalen Probenlagerung im linear ausgerichteten Träger dienen.

Ruhen die Elemente 2 auf den ersten Aufstandsflächen 4, so sind eingesetzte Probengefäße 9 vertikal ausgerichtet. Diese Anordnung wird in der linearen Lage des Trägers bevorzugt. Sowohl in der linearen Lage, als auch der gekrümmten Lage des Trägers können die Elemente 2 auf der zweiten Aufstandsfläche 12 ruhen, die senkrecht zu den Gelenkachsen 5 ausgerichtet ist. Die Probengefäße 9 sind dann um 45° zur Vertikalen geneigt. Schließlich ist in linearer Lage des Trägers ein Aufliegen der Elemente 2 auf den dritten Aufstandsflächen 16 möglich. Dann sind die Probengefäße 9 horizontal ausgerichtet.

Die dritte Aufstandsfläche 16 ist zugleich eine erste Anlagefläche, die beim Zusammenschieben benachbarter Träger wirksam wird. Wie aus den Fig. 7 und 8 ersichtlich ist, ist noch eine zweite Anlagefläche 17 parallel zur ersten Anlagefläche 16 auf der gegenüberliegenden Seite der Aufnahme 3 angeordnet. Im Bereich der zweiten Aufstandsflächen 12 hat die zweite Anlagefläche 17 einen Vorsprung 18, wogegen die erste Anlagefläche 16 dort mit einer komplementären Aussparung 19 versehen ist. Die Fig. 8 zeigt, daß in linearer Lage auf ihren ersten Aufstandsflächen 4 ruhende benachbarte Träger 1 mit ihren ersten und zweiten Anlageflächen 16, 17 gegeneinander und dabei mit ihren Vorsprüngen 18 und Aussparungen 19 ineinanderschiebbar sind. Trotz der zweiten Aufstandsflächen 12 ist somit eine platzsparende Lagerung paralleler Träger 1 möglich.

Die Aussparung 19 sowie die erste Aufstandsfläche 4 grenzen bei jedem Element der Träger 1 an der Seite der ersten Anlagefläche 16 Außenstufen 20 ab. In den zweiten Anlageflächen 17 sind hingegen Innenstufen 21 ausgebildet, die bei auf den zweiten Aufstandsflächen 12 ruhenden Trägern 1 mit den Außenstufen 20 aneinanderstoßen und eine gegenseitige Abstützung sowie eine Einsparung des Lagerraumes bewirken (Fig. 7). Zudem hat jede zweite Anlagefläche 17 im Oberbereich eine Anschrägung 22, die sich in der Schräglage des Trägers an eine Wand der Aussparung 19 anlegt und eine zusätzliche Abstützung bewirkt.

Auch diese Träger 1 haben äußere und innere Seitenflächen 7, 8, die bei linearer und gekrümmter Ausrichtung als Anschläge wirken.

In den Fig. 5 bis 8 sind für die Gelenkausbildung obere und untere Aufnahmenuten 15 erkennbar, welche der Aufnahme von Scharnierbändern dienen. Nach Fig. 9 können benachbarte Elemente 2 eines Trägers auch durch angeformte Verbindungselemente aneinandergelenkt sein, von denen ein erstes einen Zapfen 23 mit einer Stegverbindung zum Element und eine zweite eine Zapfenaufnahme 24 mit einem Durchführschlitz für die Stegverbindung aufweist.

Gemäß einer weiteren Alternativen gemäß Fig. 10 und 11 kann ein Gelenk 5 ein zusätzliches Verbindungselement 25 mit einem Mittelsteg 26 und endseitigen Verbindungszapfen 27 haben. Die Verbindungszapfen 27 sind wiederum in Zapfenaufnahmen 24 zweier benachbarter Elemente 2 eingesetzt, die Durchführschlitze für den Mittelsteg 26 haben.

Fig. 12 zeigt einen Träger 1 gemäß Fig. 7 und 8, der mit seiner zweiten Aufstandsfläche 12 auf einem unteren Randflansch 28 eines Rotortellers 29 ruht. Dabei legt sich der Träger 1 mit seiner zweiten Anlagefläche 17 und dem Oberbereich seines Vorsprunges 18 an einen komplementär geformten Kern 30 des Rotortellers 29 an.

Das Bild zeigt den Träger 1 auch in einer Nachbarlage auf einer Zuführschiene 31, in die er in Abgaberichtung A zurückkippbar ist.

Zur Festlegung des Trägers 1 auf dem Rotor 29 ist jedoch in der zweiten Aufstandsfläche 12 zumindest eines äußeren Trägerelementes 2 eine Kupplungseinrichtung 32 angebracht, die ebenfalls ein Dauermagnet sein kann. Die Kupplungseinrichtung 32 kann auch für die Kupplung einer Transporteinrichtung (Kette, Band) dienen und ist genau in der Ebene der Gelenke 5 angeordnet.

Gemäß Fig. 13 hat der Träger 1 zusätzlich an der inneren Seitenfläche 7 eines äußeren Elementes 2 eine Metallplatte 33, die mit einem Magneten 34 eines Radialsteges 35 des Rotors 29 zusammenwirkt. Das andere äußere Element 2 (nicht dargestellt) des Trägers 1 ist mit einem Magneten 34 ausgestattet, der mit einer Metallfläche in einem Radialsteg des Rotors 29 zusammenwirkt.

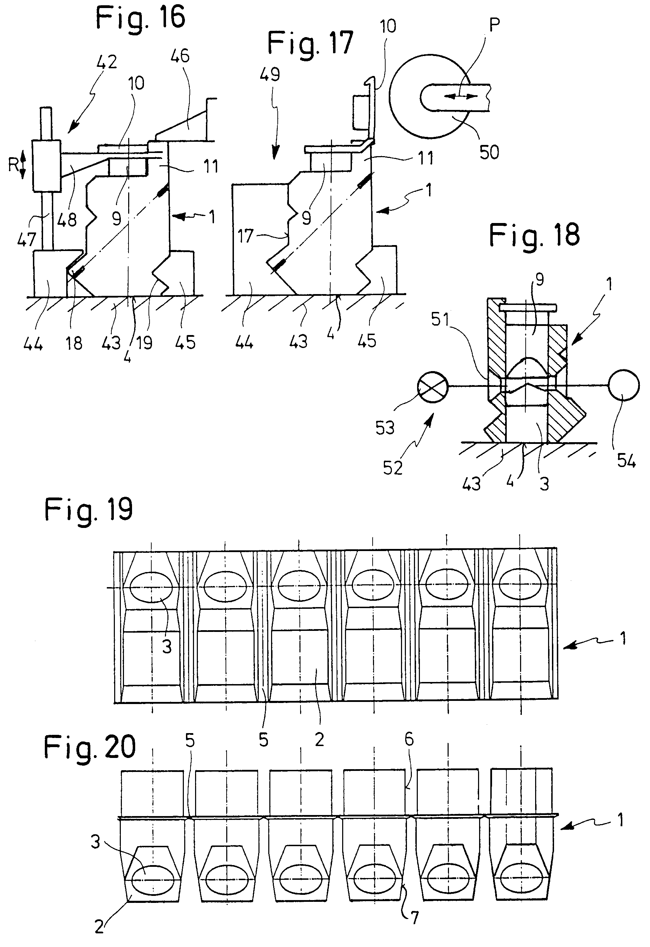

Anhand eines Trägers 1 mit Elementen 2 gemäß Fig. 5 und 6 sind in den Fig. 14 und 15 weitere Einzelheiten der Anordnung innerhalb und außerhalb des Rotors 21 gezeigt. Gemäß Fig. 20 liegt der Träger 1 in gekrümmter Lage mit seinen zweiten Aufstandsflächen 12 auf dem Rotorteller 28 auf und ist radial innen am Kern 30 des Rotors abgestützt. Ein eingesetztes Probengefäß 9 stützt sich dabei mit einem Rand oberhalb des Deckels 10 am Oberbereich des Trägers 1 ab und ragt mit einem Bodenabschnitt aus einer Bodenöffnung 38 heraus.

Der Rotor 29 hat zudem eine Rotorhaube 39, die in axialer Verschieberichtung V in eine ausgezogen eingetragene Freigabestellung und in eine strichliert eingetragene Schließstellung beweglich ist. In der Schließstellung umgreift die Rotorhaube 39 den Träger 1 und stützt diesen radial außen an der dritten Aufstandsfläche 16 ab.

In der Fig. 15 ist derselbe Träger 1 beim Ruhen auf seiner ersten Aufstandsfläche 4 gezeigt, wobei eine Unterlage 40 auf den Bodenbereich des Probengefäßes 9 einwirkt und dieses in Hubrichtung H anhebt, so daß sich sein Deckel 10 vom Oberbereich des Trägers entfernt. Hierdurch wird der Zugriff auf das Gefäß 9 erleichtert. Bevorzugt ist dabei das Probengefäß vertikal ausgerichtet.

Der Träger 1 gemäß Fig. 7 und 8 sowie Fig. 12, 13 ist in Fig. 16 in einer Vorrichtung 42 zur Deckelöffnung gezeigt.

Diese hat eine Grundplatte 43 mit Halteleisten 44, 45, welche den auf seiner ersten Aufstandsfläche 4 ruhenden Träger 1 an seinem Vorsprung 18 und seiner Aussparung 19 erfassen. Der Träger 1 ist mit den Führungssäulen 11 unter einen Niederhalter 46 geschoben, der fest mit der Grundplatte 43 verbunden ist.

Wie anhand der Fig. 15 erläutert, ragen eingesetzte Probengefäße 9 mit dem Rand ihres Deckels 10 über einen oberen Auflagebereich des Trägers 1 hinaus.

Mit der Auflage 43 sind außerdem Führungen 47 verbunden, an denen Gabeln 48 in Richtung R verschieblich geführt sind. Die Gabeln 48 untergreifen jeweils einen Deckel 10, so daß sie diese bei Verschiebung nach oben öffnen können. Dabei wird jedes Gefäß vom Niederhalter 46 im Scharnierbereich des Deckels festgehalten, so daß es von der Gabel 48 nicht aus dem Träger 1 herausgezogen werden kann. Anstatt des Niederhalters 46 kann eine radiale Belastung des Gefäßes 9 zu dessen Sicherung vorgesehen sein.

Bei einer Vorrichtung zum Deckelschließen 49 gemäß Fig. 17 sind ebenfalls eine Bodenplatte 43 sowie seitliche Halteleisten 44, 45 vorgesehen, die mit Vorsprung 18 und Aufnahme 19 eines Trägers 1 zusammenwirken. Gegenüber der Vorrichtung 42 ist die Halteleiste 44 der Vorrichtung 49 etwas höher gezogen, so daß sie den Träger 1 im Bereich der zweiten Anlagefläche 17 seitlich abstützt.

Durch das Ruhen des Trägers 1 auf der Bodenplatte 43 sind eingesetzte Probengefäße 9 etwas angehoben, wobei ein aufgeklappter Deckel 10 über die Führungssäulen 11 hinaussteht. Eine Andruckrolle 50 ist in Parallelrichtung P zur Bodenplatte 43 verschieblich, so daß sie beim Überfahren des Deckels 10 diesen mit dem Hauptabschnitt des Probengefäßes 9 zusammenschwenkt, schließt und verriegelt.

Fig. 18 zeigt einen Träger 1, der ebenfalls dem gemäß Fig. 8 und 8 sowie 12, 13 entspricht, zusätzlich jedoch mit Durchbrüchen 51 in Querrichtung zur Aufnahme 3 mit einem darin gehaltenen Probengefäß 9 ausgestattet ist. Auch in diesem Falle ruht der Träger 1 mit seiner ersten Aufstandsfläche 4 auf einer Unterlage 43, so daß das Probengefäß etwas herausgehoben ist.

Der Durchbruch 51 dient einer optischen Prüfung des Gefäßinhaltes. Dafür ist eine fotometrische Vorrichtung 52 mit einem Lichtsender 53 und einem Empfänger 54 auf die Achse des Durchbruches 51 ausgerichtet.

Die Fig. 19 und 20 zeigen einen weiteren Träger 1, der einteilig aus Kunststoff gespritzt ist. Seine Elemente 2 haben Aufnahmen 3, die senkrecht zu einer ersten Aufstandsfläche gerichtet sind. Um 45° dazu abgewinkelt ist eine zweite Aufstandsfläche 5. Die Achsen der Gelenke 5 verlaufen senkrecht zur zweiten Aufstandsfläche 5 und sind somit in einem Winkel von 45° zu den Aufnahmen 3 ausgerichtet.

Die Elemente 2 des Trägers weisen jeweils innere und äußere Seitenflächen 6, 7 für eine Schwenkwinkelbegrenzung auf. Aus Fig. 20 ist erkennbar, daß die äußeren Seitenflächen 6 in linearer Lage etwas voneinander beabstandet sind, so daß die Elemente geringfügig darüber hinaus gegeneinander abwinkelbar sind.

Die Gelenke 5 sind als Filmscharniere ausgebildet und haben an der den inneren Seitenflächen zugewandten Seite einen Radius, der ein Verschwenken in die gekrümmte Lage begünstigt, einem Schwenken über die lineare Lage hinaus jedoch entgegenwirkt. Insofern nimmt das Gelenk 5 an der Begrenzung des Schwenkwinkels teil.

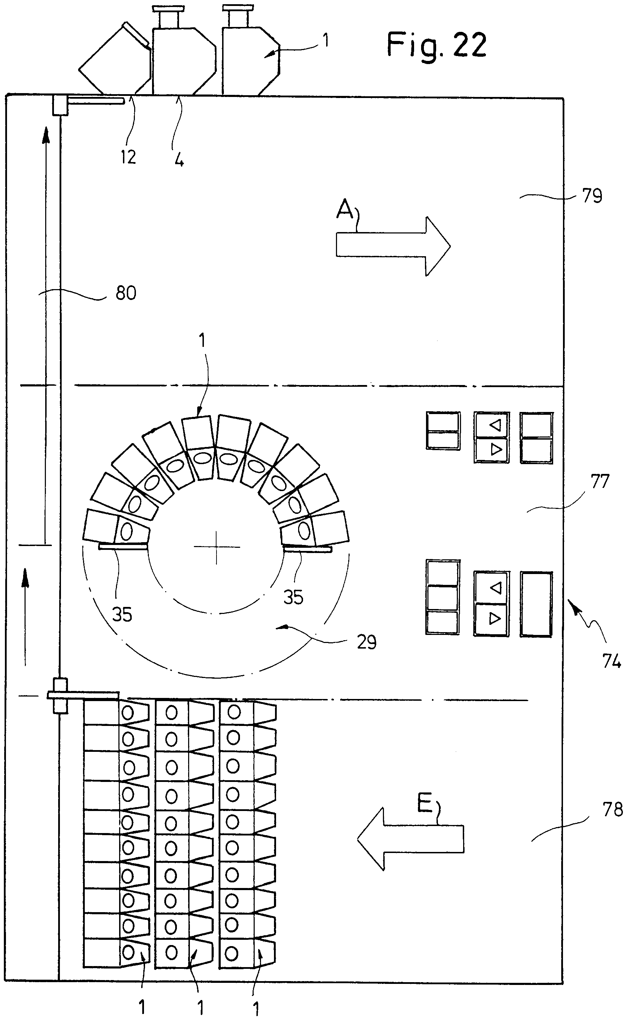

Gemäß Fig. 21 kann ein einteilig aus Kunststoff ausgebildeter Träger 1 mit seinen Aufnahmen 3 ein Gefäß für die unmittelbare Probenaufnahme bilden. Dafür ist die Aufnahme 3 nach unten zur ersten Aufstandsfläche 4 hin verschlossen und oben mit einem Deckel 10 schließbar, der über ein Filmscharnier angelenkt ist. Außerdem ist eine zweite Aufstandsfläche 12 für eine Probenanordnung schräg zur Zentrifugenachse vorgesehen. Die Achsen der Gelenke 5 für die Verbindung einzelner Elemente dieses einteiligen Trägers 1 schneidet die Schnittlinie der ersten und zweiten Aufstandsflächen 4, 12.

In der Fig. 22 ist der grundsätzliche Aufbau einer automatischen Laborzentrifuge 74 dargestellt. Der Rotor 29 befindet sich in einem Mittelbereich hinter einem Bedienfeld 77. Auf der einen Seite des Mittelbereichs befindet sich ein Eingangsbahnhof 78 und auf der anderen Seite ist ein Ausgangsbahnhof 79 angeordnet. Zwischen Eingangsbahnhof 78 und Ausgangsbahnhof 79 ist eine Führungsschiene 80 erstreckt, die tangential am Rotor 29 vorbeiführt.

Auf dem Eingangsbahnhof sind Träger 1 in mehreren Reihen angeordnet, die in Richtung des Eingangspfeiles E bewegt werden. Dabei handelt es sich um Träger, die anhand der Fig. 7, 8, 12, 13 erläutert sind.

Unmittelbar vor Erreichen der Führungsschiene 80 wird jeder Träger 1 mittels geeigneter Einrichtungen von der ersten Aufstandsfläche 4 auf die zweite Aufstandsfläche 12 gekippt. Dann wird er auf die Führungsschiene 80 geschoben und dem Rotor 29 zugeführt. Der Rotor 29 ist gemäß Fig. 22 so konstruiert, daß er zwischen zwei Radialstegen 35 zwei Träger 1 aufnehmen kann. Der Rotor 29 hat eine Rotorhaube, die axial verschiebbar ist, um Träger 1 radial zu sichern bzw. freizugeben.

Mittels weiterer, nicht dargestellter Einrichtungen sind die Träger 1 nach dem Zentrifugieren der Proben vom Rotor 29 auf die Führungsschiene 80 zurückbewegbar. Durch diese gelangen sie auf den Ausgangsbahnhof 79, wo sie in Richtung des Ausgangspfeiles A abtransportiert werden. Beim Übergang von der Führungsschiene 80 zum Ausgangsbahnhof 79 bewirkt eine weitere Mechanik, daß die Träger 1 von ihrer gekippten Position auf der zweiten Aufstandsfläche 12 in ihre ursprüngliche Lage auf der ersten Aufstandsfläche 4 mit vertikal angeordneten Gefäßen zurückgekippt werden. Die Lageänderung ist an der Außenkante des Ausgangsbahnhofs 79 in Fig. 22 versinnbildlicht.

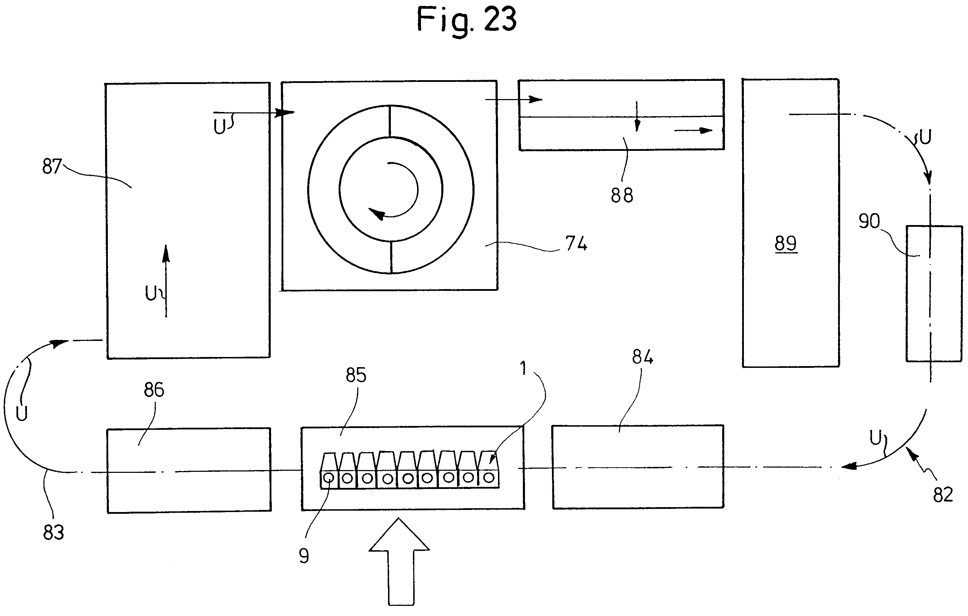

Die Fig. 23 zeigt eine automatische Zentrifuge 74 in einen Analysenautomaten 82 integriert den die Träger 1 auf einer geschlossenen Bahnkurve 83 durchlaufen.

In einer Beschickungseinrichtung 84 werden die Träger 1 mit neuen Probengefäßen 10 beschickt. Der Beschickungseinrichtung in Umlaufrichtung U der Träger 1 nachgeordnet ist eine Zuführeinrichtung 85, in der Proben zugeführt, dosiert bzw. diluiert werden. In der Zuführeinrichtung 85 werden auch die Deckel der Probengefäße geschlossen.

In Umlaufrichtung U dahinter befindet sich eine Mischeinrichtung 86, aus der eine Speicher- und Temperiereinrichtung 87 gespeist wird.

Aus der Speicher- und Temperiereinrichtung 87 gelangen die Träger 1 nach einer gewissen Verweilzeit in die Zentrifuge 74. Nach Ablauf der Zentrifugation wird eine Dekantiervorrichtung 88 durchlaufen, der eine Meßeinrichtung 89 folgt. Anschließend werden die Träger 1 in einer Entsorgungseinrichtung 90 entsorgt, indem die Probengefäße 9 entfernt und in geeigneter Weise weitergegeben werden.

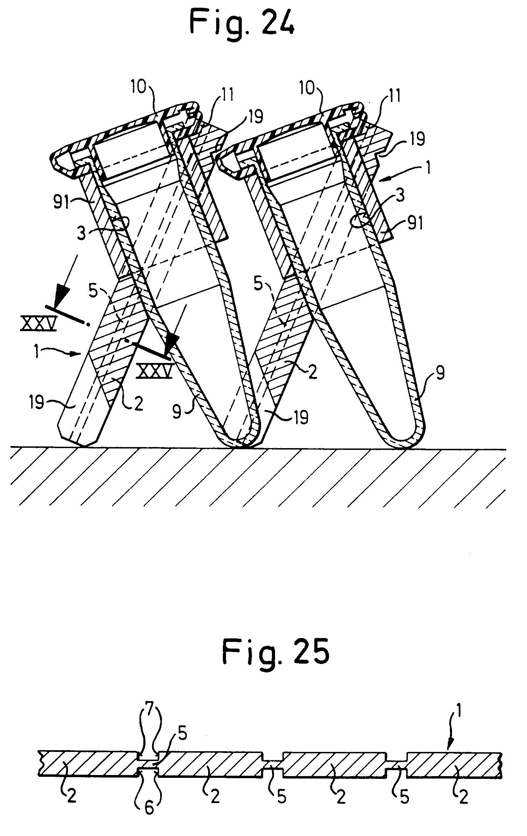

Die Träger 1 gemäß Fig. 24 und 25 haben plattenförmige Elemente 2, die an ihren Seitenkanten über Gelenke 5 in Form von Filmscharnieren aneinandergelenkt sind. Wie bei der Ausführungsform gemäß Fig. 19 und 20 lassen die Gelenke 5 eine Schwenkbarkeit der Elemente 2 von der linearen Lage des Trägers 1 ausgehend in beide Richtungen zu. Dabei wird die Schwenkbarkeit durch innere und äußere Seitenflächen 6, 7 des Trägers 1 begrenzt.

Jedes Element 2 weist eine Hülse 91 auf, die unter einem spitzen Winkel zur Platte und damit zu den Achsen der Gelenke 5 ausgerichtet ist. Die Hülsen 91 umgrenzen Aufnahmen 3, welche die Elemente 2 durchqueren.

Gemäß Fig. 24 sitzen in den Aufnahmen 3 reibschlüssig Probengefäße 9. Im Bereich ihrer Deckel 10 greifen die Probengefäße 9 zwischen Führungen 11 der plattenförmigen Basisteile der Elemente 2. Im übrigen stützen sich die Randbereiche der Deckel 10 an den oberen Stirnseiten der Hülsen 91 ab. Die Elemente 2 sowie die Probengefäße 9 ruhen mit ihren Fußbereichen auf einem Untergrund, wobei sie eine Aufstandsfläche definieren. In der gezeichneten Lage außerhalb des Rotors sind die Probengefäße 9 unter einem verhältnismäßig geringen Winkel zur Vertikalen ausgerichtet. Dies bedingt eine günstige Schwerpunktlage für Standsicherheit.

Zur weiteren Verbesserung der Standsicherheit und platzsparenden Unterbringung greifen die Probengefäße 9 mit einem anderen Randbereich ihrer Deckel 10 in eine Aussparung 19 im Oberbereich eines benachbarten Elementes 2 ein. Die Fußbereiche der Probengefäße 9 bilden Vorsprünge, die in Aussparungen 19 im Unterbereich eines benachbarten Elementes 2 eingreifen.

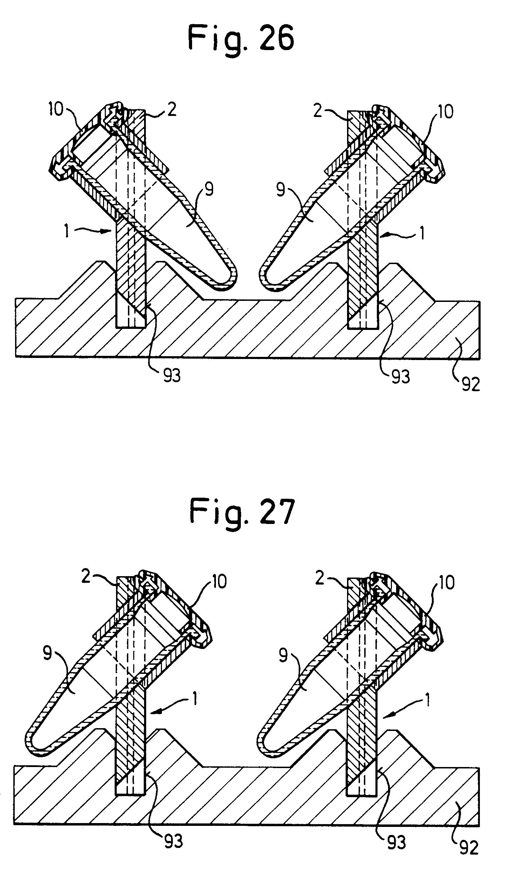

Nach den Fig. 26 und 27 kann eine Arbeitsplatte 92 für eine Positionierung der zuvor erläuterten Träger 1 außerhalb eines Rotors vorgesehen sein. Die Arbeitsplatte 92 ist mit parallelen Stecknuten 93 für die Aufnahme von Unterbereichen der plattenförmigen Elemente 2 versehen. Die Träger 1 sind reibschlüssig in ihren Nuten 93 gehalten, so daß eine Bearbeitung unter Krafteinwirkung auf die Probengefäße 9 möglich ist, beispielsweise beim Einsetzen oder Herausnehmen oder Öffnen oder Schließen der Deckel 10.

Gemäß Fig. 26 sind die Träger so ausgerichtet, daß die Probengefäße 9 einen Zugriff auf den Oberbereich der Träger 1 weniger behindern. Die Ausrichtung der Probengefäße 9 gemäß Fig. 27 erlaubt das Einsetzen bzw. Entnehmen von Proben in derselben Richtung. In beiden Fällen sind die Probengefäße 9 stärker zur Vertikalen geneigt als in Fig. 24, wodurch ein Zugriff von der Seite begünstigt wird.

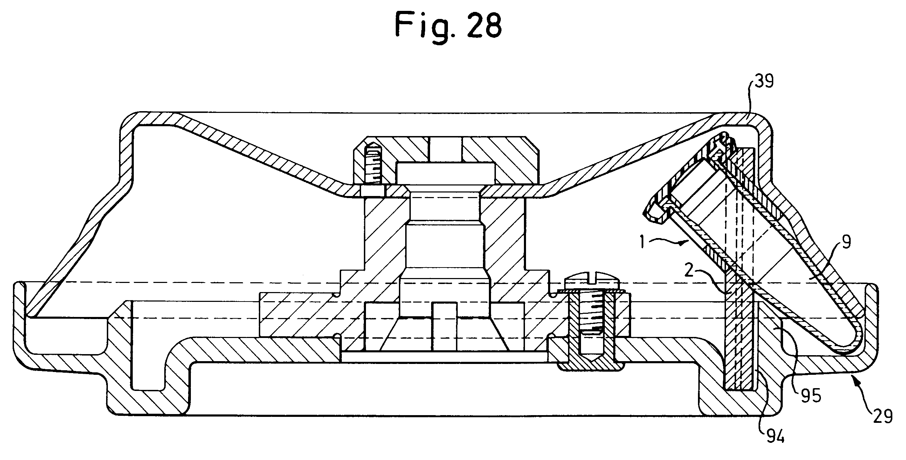

Ein Träger 1 ist für sechs Probengefäße 9 ausgelegt, so daß mehrere Träger auf einem Rotor 29 gemäß Fig. 28 anzuordnen sind. Der Rotor 29 weist eine kreisringförmige Nut 94 für die Aufnahme der Unterbereiche der plattenförmigen Elemente 2 auf. Die Nut 94 hat radial außen eine höhere Nutwand 95 als radial innen, um den Träger 1 gegenüber Fliehkrafteinflüssen weitgehend abzustützen. Oben werden die Träger 1 an ihren Elementen von einer Rotorhaube 39 abgestützt, an die sich auch die Gefäße 9 mit ihren Fußbereichen anlegen.

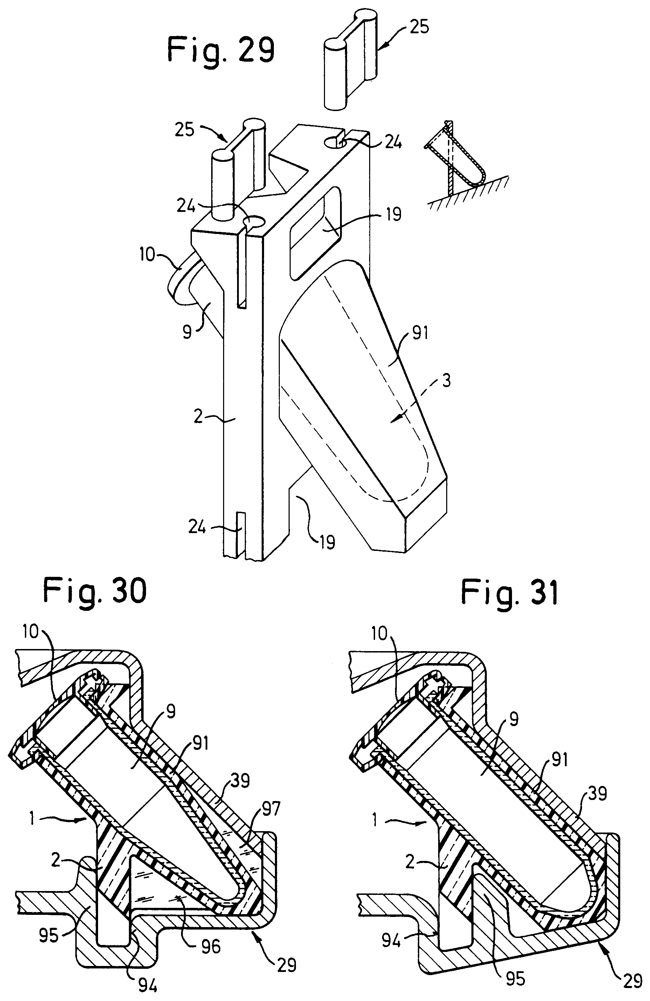

Der zuvor erläuterte Träger 1 kann einteilig aus Kunststoff gespritzt sein. Eine Kontrolle der Gefäßinhalte ist wegen der kurzen Hülsen 91 möglich, welche die Probengefäße 9 nur teilweise abdecken. Bei dem nachfolgend anhand der Fig. 29 erläuterten Träger ist eine Gefäßkontrolle aufgrund transparenter Ausführung möglich. Seine Elemente 2 sind mittels Verbindungselementen 25 miteinander verbunden, die anhand von Fig. 11 erläutert wurden.

Die transparenten Elemente 2 haben ebenfalls ein plattenförmiges Basisteil, welches im Seitenbereich oben und unten Zapfenaufnahmen 24 für die Elemente 25 aufweist. Die plattenförmigen Basisteile sind ebenfalls jeweils mit einer Hülse 91 verbunden, welche auf der gezeigten Vorderseite der Elemente 2 vollständig geschlossen ist. Die Hülse 91 bildet also eine Aufnahme 3, die ein eingesetztes Probengefäß 9 auf der vom Deckel 10 abgewandten Seite vollständig umgibt. Im Oberbereich und Unterbereich sind die plattenförmigen Elemente 2 wiederum mit Aussparungen 19 für den Deckelbereich eines Nachbargefäßes 9 bzw. den Fußbereich einer benachbarten Hülse 91 versehen. Damit kann eine gegenseitige Abstützung benachbarter Träger ähnlich wie in Fig. 24 gezeigt erfolgen. Dabei ist eine Ausrichtung der Probengefäße 9 unter einem ersten Winkel zur Vertikalen gegeben.

Gemäß Fig. 30 und 31 sind die Träger 1 mit den transparenten Elementen 2 in verschiedene Rotoren 29 von Zentrifugen eingesetzt. Dabei ist eine Ausrichtung der Gefäße 9 unter einem zweiten Winkel zur Vertikalen gegeben, der größer als der erste Winkel ist. Die Unterbereiche der plattenförmigen Elemente 2 sind nämlich wiederum in Ringnuten 94 der Rotoren 29 eingesetzt, die vertikal ausgerichtet sind.

Gemäß Fig. 30 hat die Ringnut 94 an der Innenseite eine höhere Seitenwand 95 als außen, wodurch ein Heranführen des Trägers von der Außenseite her ermöglicht wird. Zum Abfangen von Zentrifugalkräften sind zusätzliche Rippen 96 zwischen plattenförmigem Element 2 und Hülse 91 sowie 97 zwischen Hülse 91 und Rotorhaube 39 vorgesehen.

Gemäß Fig. 31 ist die radial äußere Nutseitenwand 95 überhöht, wodurch der Träger 1 von der Innenseite in die Nut 94 einführbar ist. Hier können aufgrund der Stützwirkung der äußeren Seitenwand 95 zusätzliche Rippen entfallen.

Die oben erläuterten Träger 1 nehmen beispielsweise 0,5/1,5/2 ml-Probengefäße 9 auf.

## Patentansprüche

1. Vorrichtung zum Zentrifugieren von Proben mit einem Rotor (29) und mindestens einem darauf angeordneten, mehrere Aufnahmen (3) für Proben aufweisenden Träger (1), der mehrere Elemente (2) mit jeweils mindestens einer Aufnahme mit eindeutiger Ausrichtung im Element (2) hat, wobei die Elemente (2) des Trägers (1) über Gelenke (5) mit parallelen Achsen aneinandergelenkt sind, um die die Elemente (2) in eine gekrümmte Lage mit sämtlichen Aufnahmen (3) auf einer Kreisbahn und dem Kreismittelpunkt (11) auf der Drehachse des Rotors (29) geschwenkt sind, wobei die Elemente (2) des Trägers (1) erste Ausrichtflächen (4) für eine senkrechte Ausrichtung der Aufnahmen (3) oder für eine Ausrichtung der Aufnahmen (3) unter einem ersten Winkel zur Senkrechten und zweite Ausrichtflächen (12) für eine zur Vertikalen geneigte Ausrichtung der Aufnahmen (3) oder für eine Ausrichtung der Aufnahmen (3) unter einem zweiten Winkel zur Senkrechten größer als der erste Winkel haben, der Winkel zwischen der ersten und zweiten Ausrichtfläche von 90° verschieden ist, der Winkel zwischen den beiden Ausrichtungen der Aufnahmen (3) kleiner als 90° ist, so daß die Elemente (2) durch eine Schwenkbewegung des Trägers (1) von der ersten in die zweite Ausrichtung gelangen und die Elemente (2) bei Ausrichtung mittels der zweiten Ausrichtflächen (12) auf der Kreisbahn auf dem Rotor (29) angeordnet sind, wobei die Aufnahmen (3) mit ihren Füllöffnungen (8) dem Kreismittelpunkt (M) am nächsten sind.

2. Vorrichtung nach Anspruch 1, bei der die Elemente (2) Anschläge (6, 7) zum Begrenzen ihrer gegenseitigen Schwenkbarkeit aufweisen.

3. Vorrichtung nach Anspruch 1 oder 2, bei der die Elemente (2) erste und zweite Anlageflächen (16, 17) haben, mit denen Elemente verschiedener Träger aneinanderlegbar sind.

4. Vorrichtung nach einem der Ansprüche 1 bis 3, bei der die Elemente (2) Vorsprünge (18) und komplementäre Aussparungen (19) aufweisen, mit denen Elemente verschiedener Träger (1) ineinandergreifen können.

5. Vorrichtung nach einem der Ansprüche 1 bis 4, bei der die Aufnahmen (3) neben Füllöffnungen (8) Führungen (11) für die Deckel (10) von Probengefäßen (9) haben.

6. Vorrichtung nach einem der Ansprüche 1 bis 5, bei der die Aufnahmen (3) kürzer als aufzunehmende Probengefäße (9) sind und Bodenöffnungen (38) für den Austritt eines Gefäßbodens haben.

7. Vorrichtung nach einem der Ansprüche 1 bis 5, bei der die Aufnahmen die aufzunehmenden Gefäße an der deckelabgewandten Seite vollständig umschließen.

8. Vorrichtung nach einem der Ansprüche 1 bis 7, bei der die Aufnahmen (3) ein Gefäß für die unmittelbare Probenaufnahme bilden.

9. Vorrichtung nach einem der Ansprüche 1 bis 8, bei der die Elemente (2) für eine optische Gefäßprüfung zumindest teilweise transparent sind.

10. Vorrichtung nach einem der Ansprüche 1 bis 9, bei der die Elemente blockförmig sind und von Löchern gebildete Aufnahmen haben.

11. Vorrichtung nach einem der Ansprüche 1 bis 10, bei der die Elemente plattenförmig sind und von Hülsen gebildete Aufnahmen haben.

12. Vorrichtung nach einem der Ansprüche 1 bis 11, bei der die Gelenke (5) Scharnierbänder und/oder zusätzliche Verbindungselemente (25) mit Verankerungen in Gelenkaufnahmen (24) der Elemente (2) aufweisen.

13. Vorrichtung nach einem der Ansprüche 1 bis 12, bei der der Träger (1) einteilig hergestellt ist.

14. Vorrichtung nach einem der Ansprüche 1 bis 13, bei der der Träger (1) Einrichtungen (13, 41) zur Stabilisierung der Elemente (2) in der gekrümmten und/oder der linearen Lage hat.

15. Vorrichtung nach einem der Ansprüche 1 bis 14, bei der der Träger (1) Einrichtungen (13, 33) zum Ankuppeln an den Rotor (29) oder an eine Transportvorrichtung hat.

16. Vorrichtung nach einem der Ansprüche 1 bis 15, bei der mehrere Träger (1) gleichmäßig über den Rotorumfang verteilt sind.

17. Vorrichtung nach einem der Ansprüche 1 bis 16, bei der der Rotor (29) eine Stellfläche (28) für mindestens einen Träger (1) in gekrümmter Lage und mindestens eine radiale Abstützung für den Träger aufweist.

18. Vorrichtung nach einem der Ansprüche 1 bis 17, bei der mindestens eine axiale, radiale und/oder tangentiale Führung zum Transferieren der Träger (1) zum Rotor 829) hin und/oder vom Rotor weg vorgesehen sind.

19. Vorrichtung nach einem der Ansprüche 1 bis 18, bei der mehrere Träger (1) in Speicher-, Transport- und/oder Bearbeitungseinrichtungen in linearer Lage und/oder parallel angeordnet sind.

20. Vorrichtung nach einen, der Ansprüche 1 bis 19, bei der in der Bewegungsbahn (83) des Trägers (1) Vorrichtungen zur Probenaufbereitung (86, 55) angeordnet sind.

21. Vorrichtung nach einem der Ansprüche 1 bis 20, bei der in der Bewegungsbahn (83) des Trägers (1) eine Deckelschließvorrichtung (84, 49) für eingesetzte Probengefäße (9) angeordnet ist.

## Claims

1. A device for centrifuging samples, with a rotor (29) and at least one carrier (1) arranged thereon which comprises several receivers (3) for samples and which has several elements (2) with in each case at least one receiver with a clear alignment in the element (2), wherein the elements (2) of the carrier (1) are linked to one another via joints (5) with parallel axes about which the elements (2) are pivoted into an arcuate position with all receivers (3) on a circular path and with the circle centre (11) on the rotational axis of the rotor (29), wherein the elements (2) of the carrier (1) have first aligning surfaces (4) for a perpendicular alignment of the receivers (3) or for an alignment of the receivers (3) at a first angle to the perpendicular, and two aligning surfaces (12) for an alignment of the receivers (3) inclined to the vertical or for an alignment of the receivers at a second angle to the perpendicular larger than the first angle, the angle between the first and second aligning surface is different by 90°, the angle between the two alignments of the receivers (3) is smaller than 90°, so that the elements (2) by way of a pivoting movement of the carrier (1) go from a first alignment into a second alignment and the elements (2) with an alignment by way of the second aligning surfaces (12) are arranged on the circular path of the rotor (29), wherein the receivers (3) with their filling openings (8) are closest to the circle centre (M).

2. A device according to claim 1, in which the elements (2) comprise abutments (6, 7) for limiting their mutual pivotability.

3. A device according to claim 1 or 2, in which the elements (2) have first and second bearing surfaces (16, 17) with which elements of different carriers can rest on one another.

4. A device according to one of claims 1 to 3, in which the elements (2) comprise projections (18) and complementary reliefs (19) with which elements of different carriers (1) can engage into one another.

5. A device according to one of claims 1 to 4, in which the receivers (3) next to the filling openings (8) have guides (11) for the lids (10) of sample vessels (9).

6. A device according to one of claims 1 to 5, in which the receivers (3) are shorter than the sample vessels (9) to be accommodated and have floor openings (38) for the exit of a vessel floor.

7. A device according to one of claims 1 to 5, in which the receivers completely enclose the vessels to be accommodated on the side distant to the lid.

8. A device according to one of claims 1 to 7, in which the receivers (3) form a vessel for the direct accommodation of the samples.

9. A device according to one of claims 1 to 8, in which the elements (2) are at least partly transparent for an optical examination of the samples.

10. A device according to one of claims 1 to 9, in which the elements are block-like and have receivers formed by holes.

11. A device according to one of claims 1 to 10, in which the elements are platelike and have receivers formed by sleeves.

12. A device according to one of claims 1 to 11, in which the joints (5) comprise strap hinges and/or additional connecting elements (25) with anchorings in joint receivers (24) of the elements (2).

13. A device according to one of claims 1 to 12, in which the carrier is manufactured from one piece.

14. A device according to one of claims 1 to 13, in which the carrier (1) has means (13, 41) for stabilising the elements (2) in the arcuate and/or in the linear position.

15. A device according to one of claims 1 to 14, in which the carrier has means (13, 33) for coupling onto the rotor (29) or onto a transport device.

16. A device according to one of claims 1 to 15, in which several carriers (1) are uniformly distributed about the rotor circumference.

17. A device according to one of claims 1 to 16, in which the rotor (29) comprises a placing surface (28) for at least one carrier (1) in the arcuate position and at least one radial support for the carrier.

18. A device according to one of claims 1 to 17, in which at least an axial, radial and/or tangential guide is provided for transferring the carrier (1) towards the rotor (29) or away from the rotor.

19. A device according to one of claims 1 to 18, in which several carriers (1) in storage, transport and/or treatment means are in the linear position and/or are arranged parallel.

20. A device according to one of claims 1 to 19, in which in the movement path (83) of the carrier (1) there are arranged devices for preparing samples (86, 55).

21. A device according to one of claims 1 to 20, in which in the movement path (83) of the carrier (1) there is arranged a lid locking device (84, 49) for inserted sample vessels (9).

## Revendications

1. Dispositif pour la centrifugation d'échantillons, équipé d'un rotor (29) et d'au moins un support (1) disposé sur celui-ci, présentant plusieurs logements (3) pour des échantillons, lequel présente plusieurs éléments (2) avec respectivement au moins un logement avec une orientation définie dans l'élément (2) , les éléments (2) du support (1) étant articulés les uns aux autres par des articulations (5) avec des axes parallèles, autour desquelles les éléments (2) sont basculés dans une position incurvée avec tous les logements (3) sur une trajectoire circulaire et le centre du cercle (11) sur l'axe de rotation du rotor (29), les éléments (2) du support (1) ayant des premières surfaces d'orientation (4) pour une orientation verticale des logements (3) ou pour une orientation des logements (3) avec un premier angle par rapport à la verticale et des secondes surfaces d'orientation (12) pour une orientation inclinée par rapport à la verticale des logements (3) ou pour une orientation des logements (3) avec un deuxième angle par rapport à la verticale supérieur au premier angle, l'angle entre la première surface d'orientation et la deuxième surface d'orientation étant différent de 90°, l'angle entre les deux orientations des logements (3) étant inférieur à 90°, de sorte que les éléments (2) parviennent par un mouvement de basculement du support (1) de la première orientation à la deuxième orientation et les éléments (2) sont disposés lors de l'orientation au moyen des deuxièmes surfaces d'orientation (12) sur la trajectoire circulaire sur le rotor (29), les logements (3) étant le plus proches possible du centre du cercle (M) avec leurs ouvertures de remplissage (8).

2. Dispositif selon la revendication 1, dans lequel les éléments (2) présentent des butées (6, 7) pour la limitation de leur possibilité de basculement réciproque.

3. Dispositif selon la revendication 1 ou 2, dans lequel les éléments (2) ont des premières et deuxièmes surfaces d'appui (16, 17), avec lesquelles les éléments de divers supports peuvent s'appuyer les uns sur les autres.

4. Dispositif selon l'une quelconque des revendications 1 à 3, dans lequel les éléments (2) présentent des parties en saillie (18) et des évidements (19) complémentaires, avec lesquels les éléments de divers supports (1) peuvent s'emboîter les uns dans les autres.

5. Dispositif selon l'une quelconque des revendications 1 à 4, dans lequel les logements (3) ont, en plus des orifices de remplissage (8), des guides (11) pour les couvercles (10) de récipients à échantillons (9).

6. Dispositif selon l'une quelconque des revendications 1 à 5, dans lequel les logements (3) sont plus courts que les récipients à échantillons (9) à loger et ont des ouvertures de fond (38) pour la sortie d'un fond de récipient.

7. Dispositif selon l'une quelconque des revendications 1 à 5, dans lequel les logements entourent complètement les récipients à loger sur le côté opposé au couvercle.

8. Dispositif selon l'une quelconque des revendications 1 à 7, dans lequel les logements (3) forment un récipient pour le logement direct d'échantillons.

9. Dispositif selon l'une quelconque des revendications 1 à 8, dans lequel les éléments (2) sont au moins en partie transparents pour un contrôle visuel du récipient.

10. Dispositif selon l'une quelconque des revendications 1 à 9, dans lequel les éléments sont en forme de bloc et ont des logements formés par des trous.

11. Dispositif selon l'une quelconque des revendications 1 à 10, dans lequel les éléments sont en forme de plaques et ont des logements formés par des manchons.

12. Dispositif selon l'une quelconque des revendications 1 à 11, dans lequel les articulations (5) présentent des bandes de charnière et/ou des éléments de liaison (25) supplémentaires avec des ancrages dans des logements d'articulation (24) des éléments (2).

13. Dispositif selon l'une quelconque des revendications 1 à 12, dans lequel le support (1) est fabriqué d'une seule pièce.

14. Dispositif selon l'une quelconque des revendications 1 à 13, dans lequel le support (1) présente des systèmes (13, 41) pour la stabilisation des éléments (2) dans la position incurvée et/ou la position linéaire.

15. Dispositif selon l'une quelconque des revendications 1 à 14, dans lequel le support (1) a des systèmes (13, 33) pour l'accouplement au rotor (29) ou à un dispositif de transport.

16. Dispositif selon l'une quelconque des revendications 1 à 15, dans lequel plusieurs supports (1) sont répartis régulièrement à la périphérie du rotor.

17. Dispositif selon l'une quelconque des revendications 1 à 16, dans lequel le rotor (29) présente un emplacement (28) pour au moins un support (1) dans la position incurvée et au moins un appui radial pour le support.

18. Dispositif selon l'une quelconque des revendications 1 à 17, dans lequel on prévoit au moins un guide axial, radial et/ou tangentiel pour le transfert des supports (1) en direction du rotor (29) et/ou à partir du rotor.

19. Dispositif selon l'une quelconque des revendications 1 à 18, dans lequel plusieurs supports (1) sont disposés dans des systèmes de stockage, transport et/ou de traitement dans une position linéaire et/ou parallèle.

20. Dispositif selon l'une quelconque des revendications 1 à 19, dans lequel sont disposés des dispositifs pour la préparation des échantillons (86, 55) dans la trajectoire de déplacement (83) du support (1).

21. Dispositif selon l'une quelconque des revendications 1 à 20, dans lequel est disposé dans la trajectoire de déplacement (83) du support (1) un dispositif de verrouillage de couvercle (84, 49) pour des récipients à échantillons (9) insérés.
